# FASCICULE DE BREVET EUROPEEN

(11) **EP 1 538 041 B1**
(45) Date de publication et mention de la délivrance du brevet: **02.01.2008**
(21) Numéro de dépôt: 04292732.7
(22) Date de dépôt: 18.11.2004
(51) Int. Cl.: B60T 8/00, B60T 13/74

(54) **Procédé de gestion d'une architecture de système de freinage pour aéronef équipé de freins à actionneurs électromécaniques, et architecture faisant application**
Verfahren zum Verwaltung einer Architektur eines elektromechanischen Flugzeugbremssystems sowie Bremssystemsarchitektur
Braking system architecture managing method for an aircraft with electro-mechanical brakes as well as braking system architecture

(30) Priorité: 01.12.2003 FR 0314061
(43) Date de publication de la demande: 08.06.2005
(73) Titulaire: MESSIER-BUGATTI, 78140 Velizy Villacoublay (FR)
(72) Inventeur: Dellac, Stéphane, 31170 Tournefeuille (FR); Sibre, Jérôme, 75015 Paris (FR); Girod, Pierre, 75017 Paris (FR)
(74) Mandataire: Jaunez, Xavier

(56) Documents cités:
- US-A1- 2001 045 771

## Description

L'invention concerne un procédé de gestion d'une architecture de système de freinage pour aéronef équipé de freins à actionneurs électromécaniques, et une architecture faisant application.

### ARRIERE-PLAN DE L'INVENTION

On sait que pour effectuer des essais de moteurs ou pour maintenir l'aéronef au point fixe juste avant le décollage, certains pilotes ont pris pour habitude, sur des aéronefs munis de freins hydrauliques conventionnels, d'actionner le sélecteur d'immobilisation de parc pour pouvoir immobiliser l'aéronef sans être astreint lors dudit essai à appuyer constamment sur les pédales de freins.

L'actionnement du sélecteur d'immobilisation de parc relie tous les freins de l'aéronef à un ou des accumulateurs hydrauliques qui exercent leur pression sur les pistons des freins. L'effort généré par les pistons sur les disques des freins est alors suffisant pour maintenir l'aéronef immobile malgré la poussée des moteurs.

Dans le cas d'un aéronef équipé de freins à actionneurs électromécaniques, la situation est plus délicate.

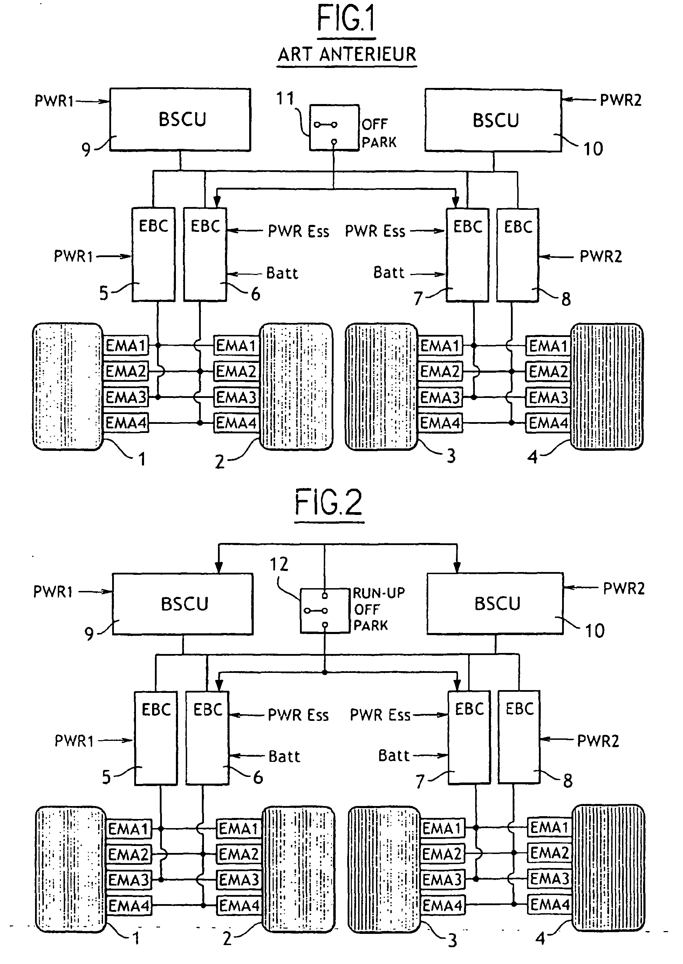

Une architecture de freinage connue, adaptée au cas particulier d'un aéronef à deux atterrisseurs principaux équipés chacun de deux roues freinées, est illustrée à la figure 1 des dessins annexés.

Chacune des roues 1,2,3,4 est associée à un frein comportant quatre actionneurs électromécaniques (appelés EMA sur la figure, en étant numérotés EMA1 à EMA4). L'architecture de freinage comporte quatre boîtiers de contrôle 5,6,7,8 (appelés EBC sur la figure) qui contrôlent chacun une moitié des actionneurs équipant chaque roue d'un même atterrisseur. Les boîtiers de contrôle EBC reçoivent les ordres de freinage de deux calculateurs de freinage 9, 10 (appelés BSCU sur la figure) .

L'aéronef est par ailleurs muni de divers générateurs d'électricité (non représentés) qui sont entraînés par les moteurs de l'aéronef, permettant de disposer d'un premier bus d'alimentation PWR1, d'un deuxième bus d'alimentation PWR2 indépendant du premier, et d'un troisième bus d'alimentation PWREss. L'aéronef dispose enfin d'une source de courant secours, comprenant en général une source de courant continu sous la forme d'une batterie ou d'un ensemble de batteries (Batt). Des raisons de ségrégation conduisent à exclure d'alimenter un même boîtier de contrôle EBC par les bus d'alimentation PWR1 et PWR2. Ces mêmes raisons conduisent à exclure d'alimenter un même boîtier par l'un des bus d'alimentation PWR1 ou PWR2 et par la source de courant continu Batt. Il est par contre acceptable d'alimenter un même boîtier de contrôle EBC par le bus d'alimentation PWREss et par la source de courant continu Batt.

Cette disposition conduit donc à retenir une architecture telle qu'illustrée à la figure 1, dans laquelle un premier boîtier de contrôle EBC (référencé 5) est alimenté par la premier bus d'alimentation PWR1, un deuxième boîtier de contrôle EBC (référencé 8) est alimenté par le deuxième bus d'alimentation PWR2, et les deux autres boîtiers de contrôle EBC (référencés 6,7) sont alimentés par le troisième bus d'alimentation PWREss et par la source de courant continu Batt.

Lorsque les moteurs de l'aéronef sont à l'arrêt, seuls les boîtiers de contrôle EBC 6,7 et les actionneurs EMA qui leur sont reliés sont aptes à fonctionner, étant alimentés par la source de courant continu qui reste seule disponible.

On pourra par exemple se référer au document US-2001/045 771 A qui illustre une telle architecture de freinage.

De façon connue en soi, ce type d'architecture est configuré pour présenter divers modes de freinage (mode normal, mode alterné, mode d'urgence, mode automatique), lors desquels les actionneurs appliquent sur les piles de disques un effort établi soit en fonction de signaux de pédale de freins actionnées par le pilote, soit en fonction d'une consigne de décélération de l'aéronef, soit en fonction d'une consigne de test fonctionnel. Ces modes seront appelés par la suite modes de freinage. Ils correspondent à la fonction nominale des freins qui consiste à absorber au moins une partie de l'énergie cinétique de l'aéronef pour le ralentir.

Ce type d'architecture est par ailleurs configuré pour présenter un mode de fonctionnement appelé mode d'immobilisation de parc lors duquel les actionneurs électromécaniques reliés à la batterie, c'est-à-dire les actionneurs EMA reliés aux boîtiers de contrôle EBC référencés 6,7, sont commandés pour développer un effort unitaire de parc prédéterminé. Ce mode est activé alors que l'aéronef est au parking, et a pour fonction de maintenir celui-ci immobile.

A cet effet, l'architecture comporte un sélecteur 11 à deux positions notées OFF et PARK. Lorsque le sélecteur 11 est en position OFF, l'architecture de freinage est configurée pour fonctionner dans un mode de freinage, en particulier dans un mode de freinage normal lors duquel tous les boîtiers de contrôle EBC commandent les actionneurs EMA correspondants à partir de consignes de freinage générées par les calculateurs de freinage BSCU. Ces consignes sont entre autres élaborées à partir de signaux de pédales actionnées par le pilote.

Lorsque le sélecteur 11 est en position PARK, l'architecture de freinage est configurée pour fonctionner en mode d'immobilisation de parc pour lequel les deux boîtiers de contrôle EBC 6,7 reliés à l'ensemble de batterie Batt sont programmés pour faire appliquer aux actionneurs EMA qu'ils commandent un effort unitaire de parc prédéterminé.

L'utilisation des actionneurs EMA associés aux boîtiers de contrôle reliés à l'ensemble de batterie permet, même lorsque les générateurs électriques de l'aéronef ne sont pas en fonctionnement, d'appliquer un effort de parc. Cette disposition s'avère utile pour, après un déplacement de l'aéronef sur le parking, immobiliser celui-ci sans nécessiter la mise en route des moteurs de l'aéronef.

Les actionneurs EMA sont équipés d'un mécanisme de verrouillage mécanique (non représenté) qui, après application de l'effort de parc, permet le verrouillage des actionneurs EMA dans une position d'application de l'effort de parc, ce qui permet d'interrompre l'alimentation des EMA et soulage ainsi l'ensemble de batterie de l'aéronef.

A titre d'exemple, pour un aéronef du type AIRBUS A320 équipé de freins à quatre actionneurs électromécaniques, les actionneurs commandés en mode de parc, à savoir la moitié des actionneurs de l'aéronef, délivrent un effort unitaire de parc s'élevant sensiblement à 33% de l'effort maximal dont ils sont capables (qui correspond au freinage lors d'un décollage refusé à pleine charge), ce qui suffit pour retenir l'aéronef à masse maximale sur un parking en pente de 3%.

On pourrait donc penser, par similarité avec les aéronefs à architecture de freinage hydraulique, pouvoir tenir le point fixe de l'aéronef en passant en mode d'immobilisation de parc. Mais, vu l'effort développé par les moteurs de l'aéronef lors du point fixe, l'effort unitaire requis dépasse de 60% l'effort maximal dont les actionneurs sont capables.

Sauf à dimensionner les actionneurs pour tenir un tel effort, ce qui se révélerait prohibitif en termes de masse et de puissance, les architectures connues de système de freinage pour aéronefs équipés de freins à actionneurs électromécaniques ne permettent donc pas de tenir le point fixe uniquement grâce au mode d'immobilisation de parc, obligeant ainsi le pilote à maintenir les pédales de freins enfoncées lors du point fixe.

### OBJET DE L'INVENTION

L'invention a pour objet un procédé de gestion d'une architecture de système de freinage pour aéronef équipé de freins à actionneurs électromécaniques, ainsi qu'une architecture faisant application, permettant de s'affranchir des limitations de l'art antérieur.

### BREVE DESCRIPTION DE L'INVENTION

On propose un procédé de gestion d'une architecture de système de freinage pour aéronef équipé de freins à actionneurs électromécaniques, dont certains actionneurs sont reliés à un ensemble de batterie de l'aéronef et d'autres actionneurs ne sont pas reliés à l'ensemble de batterie de l'aéronef, comportant selon l'invention l'étape de commander au moins un actionneur non relié à l'ensemble de batterie pour lui faire développer un effort égal à un effort unitaire de maintien indépendant d'une demande de freinage du pilote.

Par "indépendant d'une demande de freinage du pilote", on entend que l'effort unitaire de maintien n'est pas déterminé en fonction de signaux provenant des pédales du pilote, ou encore en fonction d'une consigne de décélération qui est générée par le calculateur de freinage en réponse à une requête du pilote d'un freinage à décélération constante.

Ainsi, l'invention va à l'encontre du préjugé existant que seuls les actionneurs reliés à la batterie peuvent être commandés pour développer un effort non lié à une demande de freinage du pilote. L'invention ouvre la voie à des modes de maintien permettant de garder l'aéronef immobile au point fixe, ou lors d'un essai de moteurs.

L'effort unitaire de maintien pourra être selon l'invention prédéterminé, ou encore calculé en fonction d'une poussée des moteurs de l'aéronef.

Selon un mode particulier de mise en oeuvre du procédé de l'invention, celui ci comporte l'étape de commander les actionneurs reliés à l'ensemble de batterie et un certain nombre d'actionneurs non reliés à l'ensemble de batterie pour leur faire chacun développer un effort égal à l'effort unitaire de maintien, le nombre total d'actionneurs concernés étant suffisant pour tenir l'aéronef immobile sous la poussée des moteurs de l'aéronef.

L'aéronef est ainsi tenu immobile grâce à la mobilisation d'un nombre plus important d'actionneurs que ceux reliés à l'ensemble de batterie, ce qui permet de baisser l'exigence d'effort unitaire de maintien à une valeur plus basse compatible avec le dimensionnement normal des actionneurs.

L'invention a également pour objet une architecture spécialement adaptée à mettre en oeuvre le procédé de l'invention, comprenant un moyen d'enclenchement d'au moins trois fonctionnements différents, dont :
- un fonctionnement de l'architecture selon un ou des modes de freinage lors duquel tous les actionneurs sont commandés pour exercer un effort essentiellement variable en fonction d'une demande de freinage du pilote ou d'un calculateur de l'aéronef (notamment en cas de test de freinage) ;
- un fonctionnement de l'architecture selon un mode d'immobilisation de parc lors duquel seuls des actionneurs alimentés par l'ensemble de batterie sont commandés pour exercer un effort unitaire de parc prédéterminé ;
- un fonctionnement de l'architecture en mode d'immobilisation de maintien lors duquel au moins un actionneur non relié à l'ensemble de batterie est commandé pour exercer un effort unitaire égal à un effort unitaire de maintien.

Selon un premier mode particulier de réalisation de l'invention, le moyen d'enclenchement comprend un sélecteur à trois positions, chacune des positions correspondant à l'un des trois fonctionnements.

Selon un deuxième mode particulier de réalisation de l'invention, le moyen d'enclenchement comprend un sélecteur à deux positions, l'architecture étant configurée pour :
. lorsque le sélecteur est dans une première position, enclencher le fonctionnement de l'architecture selon l'un des modes de freinage;
. lorsque le sélecteur est dans une deuxième position :
   - enclencher par défaut le fonctionnement de l'architecture en mode d'immobilisation de parc,
   - et, en réponse à un signal supplémentaire représentatif d'un dépassement par la poussée moteur d'un seuil prédéterminé, enclencher le fonctionnement en mode d'immobilisation de maintien.

Selon un troisième mode particulier de réalisation de l'invention, le moyen d'enclenchement comprend un sélecteur de parc à deux positions et un sélecteur de maintien à deux positions, l'architecture étant configurée pour
. lorsque le sélecteur de parc et le sélecteur de maintien sont dans une première position, enclencher le fonctionnement de l'architecture selon l'un des modes de freinage;
. lorsque le sélecteur de parc est dans une seconde position, et quelle que soit la position du sélecteur de maintien, enclencher le fonctionnement de l'architecture selon le mode d'immobilisation de parc ;
. lorsque le sélecteur de maintien est dans une seconde position, et quelle que soit la position du sélecteur de parc, enclencher le fonctionnement de l'architecture selon le mode d'immobilisation de maintien.

### BREVE DESCRIPTION DES DESSINS

L'invention sera mieux comprise à la lumière de la description qui suit en référence aux figures des dessins annexés parmi lesquelles, outre la figure 1 déjà présentée,
- la figure 2 est une vue schématique d'une architecture de freinage selon un premier mode de réalisation particulier de l'invention, comportant un sélecteur à trois positions ;
- la figure 3 est une vue schématique d'une architecture de freinage selon un deuxième mode de réalisation particulier de l'invention, comportant un sélecteur à deux positions ;
- la figure 4 est une vue schématique d'une architecture de freinage selon un troisième mode particulier de réalisation de l'invention, comportant deux sélecteurs à deux positions.

### DESCRIPTION DETAILLEE DE L'INVENTION

Selon un premier mode particulier de réalisation de l'invention illustré à la figure 2, et sur laquelle les éléments communs à ceux de la figure 1 portent les mêmes noms ou références, le sélecteur de parc 11 de l'art antérieur est remplacé par un sélecteur 12 à trois positions.

Les deux premières positions, OFF et PARK sont similaires à celles du sélecteur de l'art antérieur et servent comme auparavant à enclencher le fonctionnement selon l'un des modes de freinage et le fonctionnement selon le mode d'immobilisation de parc. Le sélecteur comporte selon l'invention une troisième position, appelée RUN-UP, qui enclenche le fonctionnement en mode d'immobilisation de maintien, utilisé lors d'un essai de moteurs, ou lors d'un point fixe avant décollage.

Dans ce mode, les calculateurs de freinage BSCU 9,10 envoient à tous les boîtiers de contrôle EBC 5,6,7,8 une consigne, indépendante du signal provenant des consignes de freinage du pilote, et en particulier des signaux de pédales.

La consigne est convertie par les boîtiers de contrôle EBC 5,6,7,8 en une commande pour chaque actionneur de développer un effort unitaire de maintien.

Cet effort unitaire est de préférence prédéterminé, en étant suffisamment important pour que le couple généré par tous les feins permette de tenir l'aéronef immobile même sous une poussée maximale des moteurs.

En variante, et afin de limiter la consommation électrique des actionneurs, la consigne peut être variable en fonction de la poussée des moteurs, tout en étant suffisante pour maintenir l'aéronef constamment immobile. En pratique, une telle consigne augmente avec la poussée des moteurs. Elle pourra augmenter soit continûment, soit par paliers.

On constate donc que dans le mode d'immobilisation de maintien, de fois plus d'actionneurs sont sollicités que dans le mode d'immobilisation de parc.

Reprenant l'exemple chiffré déjà développé, il suffit donc, pour tenir le point fixe de l'aéronef, que chaque actionneur délivre un effort de seulement 80% de l'effort maximal dont les actionneurs sont capables

Il est donc possible de tenir le point fixe de l'aéronef sans exiger du pilote de garder les pieds sur les pédales.

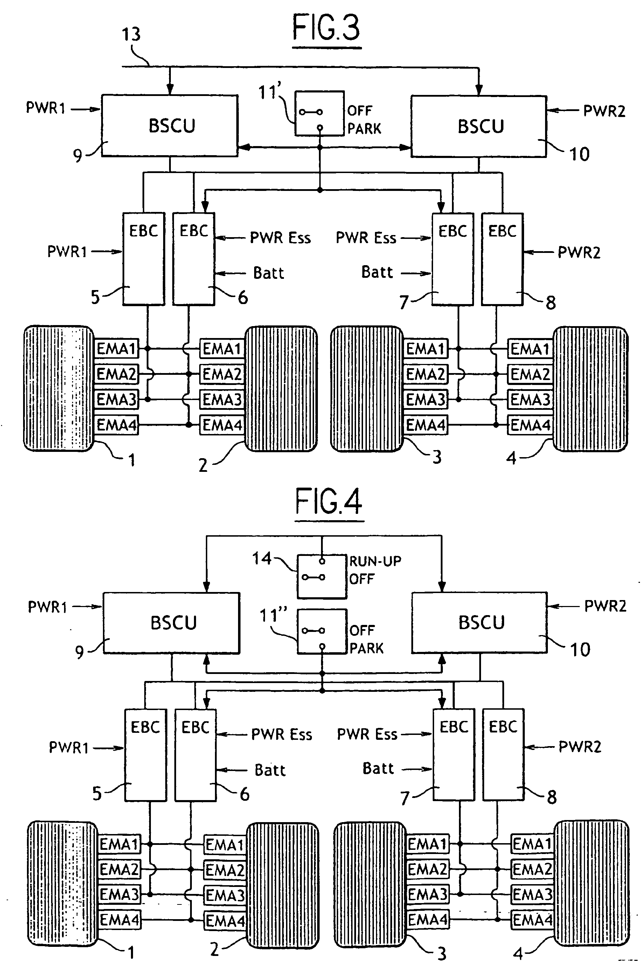

Selon un deuxième mode de réalisation illustré à la figure 3, on revient à un sélecteur à deux positions 11', comme dans l'art antérieur. La position OFF enclenche toujours le mode de freinage normal. Quant à la position PARK, elle permet d'enclencher soit le mode d'immobilisation de parc, soit le mode d'immobilisation de maintien selon les dispositions suivantes.

Un signal 13 représentatif d'une poussée des moteurs est fourni aux calculateurs de freinage BSCU 9,10. Ce signal peut par exemple être la position de la manette des gaz, le régime d'au moins un moteur, ou encore un signal provenant d'un capteur d'effort ou de déformation placé dans une portion de l'aéronef qui subit un tel effort ou déformation sous l'effet de la poussée des moteurs.

En l'absence d'un tel signal, le mode de fonctionnement enclenché par l'architecture est le mode d'immobilisation de parc dans lequel les actionneurs EMA reliés à l'ensemble de batterie sont commandés pour appliquer un effort unitaire de parc.

A l'arrivée dudit signal, l'architecture passe automatiquement du mode d'immobilisation de parc au mode d'immobilisation de maintien, sans que le pilote n'intervienne. Les calculateurs de freinage BSCU commandent alors tous les actionneurs EMA pour chacun développer un effort de maintien. La séquence d'application de l'effort de maintien peut alors être la suivante:
l'architecture est initialement en mode d'immobilisation de parc, dans lequel les actionneurs EMA reliés à l'ensemble de batterie sont mécaniquement verrouillés et développent chacun un effort unitaire égal à l'effort unitaire de parc.

Lorsque le signal représentatif de la poussée des moteurs survient, les calculateurs de freinage BSCU 9,10 commandent, via les boîtiers de contrôle EBC 5,8, les actionneurs EMA non reliés à l'ensemble de batterie pour développer un effort égal à l'effort unitaire de maintien, et commandent, via les boîtiers de contrôle EBC 6,7, les actionneurs EMA reliés à l'ensemble de batterie pour les déverrouiller et augmenter l'effort développé de l'effort unitaire de parc à l'effort unitaire de maintien.

Tous les actionneurs sont alors verrouillés en position d'application de l'effort unitaire de maintien.

Le passage au mode d'immobilisation de maintien est donc totalement transparent pour le pilote, pour lequel tout se passe comme s'il était à bord d'un aéronef équipé d'une architecture de freinage hydraulique n'ayant que deux fonctionnements possibles : un ou des modes de freinage, et un mode d'immobilisation de parc.

Selon un troisième mode particulier de réalisation illustré à la figure 4 sur laquelle les éléments communs à ceux de la figure 1 portent les mêmes noms et références, on utilise cette fois deux sélecteurs à deux positions, dont un sélecteur de parc 11'' similaire au sélecteur de parc de la figure 1 et comportant comme celui-ci une position OFF et une position PARK, et un sélecteur de maintien 14 comportant une position OFF et une position RUN-UP.

L'architecture est configurée de telle sorte que, lorsque les deux sélecteurs 11'' et 14 sont en position OFF, l'architecture fonctionne selon l'un des modes de freinage.

Lorsque le pilote actionne le sélecteur de parc 11'' pour le placer en position PARK, l'architecture est configurée pour fonctionner selon le mode d'immobilisation de parc, indépendamment de la position du sélecteur de maintien 14.

De même, lorsque le pilote actionne le sélecteur de maintien 14 pour le placer en position RUN-UP, l'architecture est configurée pour fonctionner en mode d'immobilisation de maintien, indépendamment de la position du sélecteur de parc 11''.

L'invention n'est pas limitée aux modalités particulières de l'invention qui viennent d'être décrites, mais bien au contraire englobe toute variante entrant dans le cadre de l'invention tel que défini par les revendications.

En particulier, bien que l'application de l'effort de maintien se fasse, dans les architectures illustrées, par l'intermédiaire d'une consigne élaborée par les calculateurs de freinage BSCU, il est tout à fait possible, à l'instar du mode d'immobilisation de parc, de programmer les boîtiers de contrôle EBC pour qu'ils commandent aux actionneurs concernés de développer un effort unitaire de maintien en réponse à l'enclenchement du mode d'immobilisation de maintien, sans que les calculateurs de freinage BSCU n'aient à générer une quelconque consigne.

Bien que dans l'exemple illustré, le mode d'immobilisation de maintien fasse appel à tous les actionneurs de l'aéronef, on pourra mettre en oeuvre ce mode d'immobilisation de maintien en ne faisant appel qu'à une partie seulement des actionneurs de l'aéronef.

## Revendications

1. Procédé de gestion d'une architecture de système de freinage pour aéronef équipé de freins à actionneurs électromécaniques (EMA) , dont certains actionneurs sont reliés à un ensemble de batterie (Batt) de l'aéronef et d'autres actionneurs ne sont pas reliés à l'ensemble de batterie (Batt) de l'aéronef, **caractérisé en ce que** le procédé comporte l'étape de commander au moins un actionneur non relié à l'ensemble de batterie (Batt) pour lui faire exercer un effort égal à un effort unitaire de maintien qui est déterminé indépendamment d'une demande de freinage du pilote.

2. Procédé selon la revendication 1, **caractérisé en ce que** l'effort unitaire de maintien est prédéterminé.

3. Procédé selon la revendication 1, **caractérisé en ce que** l'effort unitaire de maintien est calculé en fonction d'une poussée des moteurs de l'aéronef.

4. Procédé selon la revendication 1, **caractérisé en ce qu'**il comporte l'étape de commander les actionneurs (EMA) reliés à l'ensemble de batterie (Batt) et un certain nombre d'actionneurs (EMA) non reliés à l'ensemble de batterie (Batt) pour leur faire chacun développer un effort égal à l'effort unitaire de maintien, le nombre total d'actionneurs concernés étant suffisant pour tenir l'aéronef immobile sous la poussée des moteurs de l'aéronef.

5. Architecture spécialement adaptée à mettre en oeuvre le procédé selon l'une des revendications précédentes, **caractérisée en ce qu'**elle comprend un moyen d'enclenchement (12 ;11', 13 ;11", 14) d'au moins trois fonctionnements, dont :
- un fonctionnement de l'architecture selon un ou des modes de freinage lors duquel tous les actionneurs sont commandés pour exercer un effort de freinage essentiellement variable calculé en fonction d'une demande de freinage du pilote ou d'un calculateur de l'aéronef;
- un fonctionnement de l'architecture selon un mode d'immobilisation de parc lors duquel seuls des actionneurs alimentés par l'ensemble de batterie sont commandés pour exercer un effort unitaire de parc prédéterminé;
- un fonctionnement de l'architecture selon un mode d'immobilisation de maintien lors duquel au moins un actionneur non relié à l'ensemble de batterie est commandé pour exercer un effort unitaire égal à un effort unitaire de maintien.

6. Architecture selon la revendication 5, **caractérisée en ce que** le moyen d'enclenchement comprend un sélecteur à trois positions (12), chacune des positions correspondant à l'un des trois fonctionnements.

7. Architecture selon la revendication 5, **caractérisée en ce que** le moyen d'enclenchement comprend un sélecteur à deux positions (11'), et **en ce que** l'architecture est configurée pour,
• lorsque le sélecteur (11') est dans une première position, enclencher le fonctionnement de l'architecture selon l'un des modes de freinage
• lorsque le sélecteur (11') est dans une deuxième position :
- enclencher par défaut le fonctionnement de l'architecture selon le mode d'immobilisation de parc,
- et, en réponse à un signal (13) supplémentaire représentatif d'un dépassement par la poussée moteur d'un seuil prédéterminé, enclencher le fonctionnement selon le mode d'immobilisation de maintien.

8. Architecture selon la revendication 5, **caractérisée en ce que** le moyen d'enclenchement comprend un sélecteur de parc à deux positions (11"), et un sélecteur de maintien à deux positions (14), et **en ce que** l'architecture est configurée pour:
. lorsque le sélecteur de parc (11") et le sélecteur de maintien (14) sont dans une première position, enclencher le fonctionnement de l'architecture selon l'un des modes de freinage,
. lorsque le sélecteur de parc (11") est dans une seconde position, et quelle que soit la position du sélecteur de maintien (14), enclencher le fonctionnement de l'architecture selon le mode d'immobilisation de parc,
. lorsque le sélecteur de maintien (14) est dans une seconde position, et quelle que soit la position du sélecteur de parc (11"), enclencher le fonctionnement de l'architecture selon le mode d'immobilisation de maintien.

## Claims

1. A method of managing a braking system architecture for an airplane fitted with brakes having electromechanical actuators (EMA), in which some of the actuators are connected to a battery assembly (Batt) of the airplane and other actuators are not connected to the battery assembly (Batt) of the airplane, the method being **characterized in that** it comprises a step of controlling at least one of the actuators that is not connected to the battery assembly (Batt) to cause it to exert a force equal to a unit holding force, which force is determined independently of any braking demand from the pilot.

2. A method according to claim 1, **characterized in that** the unit holding force is predetermined.

3. A method according to claim 1, **characterized in that** the unit holding force is calculated as a function of the thrust from the engines of the airplane.

4. A method according to claim 1, **characterized in that** it includes the step of controlling the actuators (EMA) connected to the battery assembly (Batt) and a certain number of actuators (EMA) not connected to the battery assembly (Batt) so as to cause each of the actuators concerned to develop a force equal to the unit holding force, with the number of actuators concerned being sufficient to hold the airplane stationary under the thrust from the engines of the airplane.

5. An architecture specially adapted to implementing the method according to any preceding claim, the architecture being **characterized in that** it comprises selector means (12; 11', 13 ; 11", 14) for selecting at least three modes of operation, namely:
• a mode of operation of the architecture in one or more braking modes during which all of the actuators are controlled to exert a braking force that is essentially variable and that is calculated as a function of braking demand from the pilot or from a control unit of the airplane;
. a mode of operation of the architecture in a parking mode during which only those actuators that are powered by the battery assembly are controlled to exert a predetermined unit parking force; and
. a mode of operation of the architecture in a holding mode during which at least one actuator that is not connected to the battery assembly is controlled to exert a unit force equal to a unit holding force.

6. An architecture according to claim 5, **characterized in that** the selector means comprises a three-position selector (12), with each of the positions corresponding to one of the three modes of operation.

7. An architecture according to claim 5, **characterized in that** the selector means comprises a two-position selector (11'), and **in that** the architecture is configured:
• when the selector (11') is in a first position, to cause the architecture to operate in one of the braking modes, and
• when the selector (11') is in a second position:
. by default to engage operation of the architecture in a parking mode; and
. in response to an additional signal (13) representative of engine thrust exceeding a predetermined threshold, to engage operation in holding mode.

8. An architecture according to claim 5, **characterized in that** the selector means comprises a two-position parking selector (11"), and a two-position holding selector (14), and **in that** the architecture is configured:
• when the parking selector (11") and the holding selector (14) are in a first position, to engage operation of the architecture in one of the braking modes;
. when the parking selector (11") is in a second position, and regardless of the position of the holding selector (14), to engage operation of the architecture in a parking mode; and
. when the holding selector (14) is in a second position, and regardless of the position of the parking selector (11"), to engage operation of the architecture in a holding mode.

## Patentansprüche

1. Verfahren zum Verwalten einer Architektur eines Flugzeugbremssystems, das mit Bremsen mit elektromechanischen Aktuatoren (EMA) ausgerüstet ist, von denen einige Aktuatoren mit einem Batteriesatz (Batt) des Flugzeugs und andere Aktuatoren nicht mit dem Batteriesatz (Batt) des Flugzeugs verbunden sind, **dadurch gekennzeichnet, dass** das Verfahren den Schritt des Steuerns mindestens eines nicht mit dem Batteriesatz (Batt) verbundenen Aktuators umfasst, um ihn eine Kraft ausüben zu lassen, die gleich einer Einheitshaltekraft ist, die unabhängig von einer Bremsanforderung des Piloten bestimmt wird.

2. Verfahren nach Anspruch 1, **dadurch gekennzeichnet, dass** die Einheitshaltekraft vorgegeben ist.

3. Verfahren nach Anspruch 1, **dadurch gekennzeichnet, dass** die Einheitshaltekraft abhängig von einem Schub der Motoren des Flugzeugs berechnet wird.

4. Verfahren nach Anspruch 1, **dadurch gekennzeichnet, dass** es den Schritt des Steuerns der mit dem Batteriesatz (Batt) verbundenen Aktuatoren (EMA) und einer gewissen Anzahl von nicht mit dem Batteriesatz (Batt) verbundenen Aktuatoren (EMA) umfasst, um diese jeweils eine Kraft entwickeln zu lassen, die gleich der Einheitshaltekraft ist, wobei die Gesamtanzahl betroffener Aktuatoren ausreicht, um das Flugzeug unter dem Schub der Motoren des Flugzeugs unbeweglich zu halten.

5. Architektur, die speziell an das Durchführen des Verfahrens nach einem der vorhergehenden Ansprüche angepasst ist, **dadurch gekennzeichnet, dass** sie Einschaltmittel (12; 11', 13; 11 ", 14) zum Einschalten von mindestens drei Funktionen umfasst, darunter:
- eine Funktion der Architektur entsprechend einem Bremsmodus bzw. Bremsmodi, bei dem alle Aktuatoren gesteuert werden, um eine im Wesentlichen variable Bremskraft auszuüben, die abhängig von einer Bremsanforderung des Piloten oder eines Rechners des Flugzeugs berechnet wird,
- eine Funktion der Architektur entsprechend einem Parkblockiermodus, bei dem nur die von dem Batteriesatz gespeisten Aktuatoren gesteuert werden, um eine vorgegebene Einheitsparkkraft auszuüben,
- eine Funktion der Architektur entsprechend einem Halteblockiermodus, bei dem mindestens ein nicht mit dem Batteriesatz verbundener Aktuator gesteuert wird, um eine Einheitskraft auszuüben, die gleich einer Einheitshaltekraft ist.

6. Architektur nach Anspruch 5, **dadurch gekennzeichnet, dass** die Einschaltmittel einen Wahlschalter (12) mit drei Stellungen umfassen, wobei jede der Stellungen einer der drei Funktionen entspricht.

7. Architektur nach Anspruch 5, **dadurch gekennzeichnet, dass** die Einschaltmittel einen Wahlschalter (11') mit zwei Stellungen umfassen und dass die Architektur derart konfiguriert ist, dass
• wenn der Wahlschalter (11') in einer ersten Stellung ist, die Funktion der Architektur entsprechend einem der Bremsmodi eingeschaltet wird
• wenn der Wahlschalter (11') in einer zweiten Stellung ist:
- standardmäßig die Funktion der Architektur entsprechend dem Parkblockiermodus eingeschaltet wird,
- und in Antwort auf ein zusätzliches Signal (13), das repräsentativ für ein Überschreiten eines vorgegebenen Schwellenwertes durch den Motorschub ist, die Funktion entsprechend dem Halteblockiermodus eingeschaltet wird.

8. Architektur nach Anspruch 5, **dadurch gekennzeichnet, dass** die Einschaltmittel einen Parkwahlschalter (11 ") mit zwei Stellungen und einen Haltewahlschalter (14) mit zwei Stellungen umfassen, und dass die Architektur derart konfiguriert ist, dass
- wenn der Parkwahlschalter (11 ") und der Haltewahlschalter (14) in einer ersten Stellung ist, die Funktion der Architektur entsprechend einem der Bremsmodi eingeschaltet wird,
- wenn der Parkwahlschalter (11 ") in einer zweiten Stellung ist, unabhängig von der Stellung des Haltewahlschalters (14) die Funktion der Architektur entsprechend dem Parkblockiermodus eingeschaltet wird,
- wenn der Haltewahlschalter (14) in einer zweiten Stellung ist, unabhängig von der Stellung des Parkwahlschalters (11 ") die Funktion der Architektur entsprechend dem Halteblockiermodus eingeschaltet wird.
